# EUROPEAN PATENT APPLICATION

(11) **EP 1 244 045 A1**
(43) Date of publication of application: **25.09.2002**
(21) Application number: 02394035.6
(22) Date of filing: 22.03.2002
(51) Int. Cl.: G06F 17/60

(54) **Prepaid internet access system and method**

(30) Priority: 23.03.2001 US 816700
(71) Applicant: Newman Schulz, Roger, Costa Mesa, CA 92626-4613 (US)
(72) Inventor: Newman Schulz, Roger, Costa Mesa, CA 92626-4613 (US)
(74) Representative: McCarthy, Denis Alexis

(57) **Abstract**

A business method for providing Internet access to users comprises requesting access to the Internet via the public telephone network or other Internet access infrastructure such as DSL, cable, wireless, or dedicated line, presenting a user name and password and then verifying the user name, password, account activation status and account time balance if the account is for a fixed amount of on line time, or date of expiration if the account is for a fixed elapsed time. The system acknowledges user access by identifying the account time balance or expiration date. This is followed by allowing access to the Internet and using the Internet access for a session time of not more than the account time balance or up to the terminal date. After that the access time is disconnected. A new account time balance is calculated if appropriate and the time balance, if any, is communicated to the user.

## Description

### BACKGROUND OF THE INVENTION

### FIELD OF THE INVENTION:

This invention relates generally to metered Internet use and more particularly to a business method providing access to the Internet through prepaid contractual arrangements.

### DESCRIPTION OF RELATED ART:

The following art defines the present state of this field:

Walker et al., U.S. 5,737,414 teaches a billing and collection system for enabling payment for a service provided over a data network by billing a customer for a telephone connection to a shared revenue billing network where the telephone connection to the billing network regulates access to the service provided over the data network, comprising: a data network including at least one user on-line service provider presenting at least one service for on-line access by a user with a user computer through the data network, a billing network and an access management computer for controlling access to the on-line service provider and billing the user for access to the on-line service provider, the access management computer communicating with the data network for enabling and terminating access to the on-line service provider through the user computer whereby the billing network shares revenues for the telephone connection with the on-line service provider.

Mansey, U.S. 6,023,499 teaches a method and technique for real-time monitoring of charges for using a communication network service, thereby enabling a user to continuously know the charges incurred during each usage. The user also is able to define a charge limit prior to using the service and the usage terminates automatically when the accumulated charge reaches that limit. The present method is particularly adapted to monitoring charges associated with a telephone conference call.

The prior art teaches the use of the Internet for billing and for real time monitoring of charges, and further to enable the user to define a charge limit prior to using such services and especially with the use of a telephone conference call, but does not teach the user of the Internet for providing a service to customers who will, in turn act as ISP's for their clients in a prepaid Internet access method. The present invention fulfills these needs and provides further related advantages as described in the following summary.

### SUMMARY OF THE INVENTION

The present invention teaches certain benefits in construction and use which give rise to the objectives described below.

The present invention defines a novel business method for providing Internet access to users. It comprises: requesting access to the Internet via the public telephone network, presenting a user name and password and then verifying the user name, password, account activation status and account time balance if the account is for a fixed amount of on line time, or date of expiration if the account is for a fixed elapsed time. The system acknowledges user access by identifying the account time balance or expiration date. This is followed by allowing access to the Internet and using the Internet access for a session time of not more than the account time balance or up to the terminal date. After that the access time is disconnected. A new account time balance is calculated if appropriate and the time balance, if any, is communicated to the user.

A primary objective of the present invention is to provide an apparatus and method of use of such apparatus that provides advantages not taught by the prior art.

Another objective is to provide such an invention capable of managing a large number of Internet accounts.

A further objective is to provide such an invention capable of enabling a primary customer to allocate a large number of accounts for Internet usage to his clients.

A still further objective is to provide such an invention capable of providing a time of use purchase standard as well as an end-time standard.

Other features and advantages of the present invention will become apparent from the following more detailed description, taken in conjunction with the accompanying drawings, which illustrate, by way of example, the principles of the invention.

### BRIEF DESCRIPTION OF THE DRAWINGS

The accompanying drawings illustrate the present invention. In such drawings:
Figure 1 is a flow diagram of the preferred embodiment of the invention;
Figure 2 is a flow diagram of the system logic used for checking the current status of each user account;
Figure 3 is a representation of a computer screen showing the main menu;
Figure 4 is a representation of a computer screen showing the account batch set up table;
Figure 5 is a representation of a computer screen showing the account generator table;
Figure 6 is a representation of a computer screen showing the accounts table;
Figure 7 is a representation of a computer screen showing the call records table;
Figure 8 is a representation of a computer screen showing the RADIUS logs table;
Figure 9 is a representation of a computer screen showing the report menu;
Figure 10 is a representation of a computer screen showing the configuration menu;
Figure 11 is a representation of a computer screen showing the servers table;
Figure 12 is a representation of a computer screen showing the attribute configuration table; and
Figure 13 is a representation of a computer screen showing the roaming servers table.

### DETAILED DESCRIPTION OF THE INVENTION

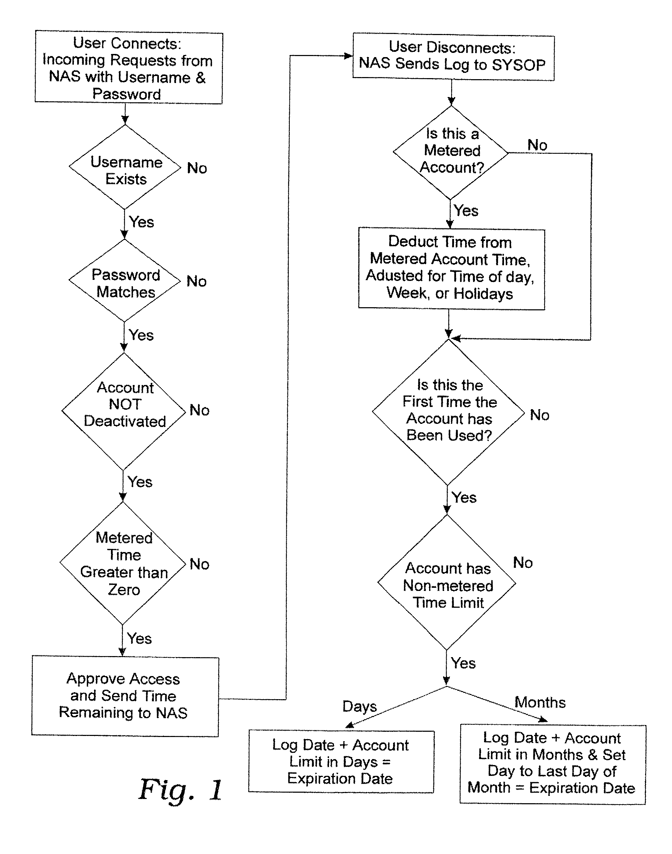

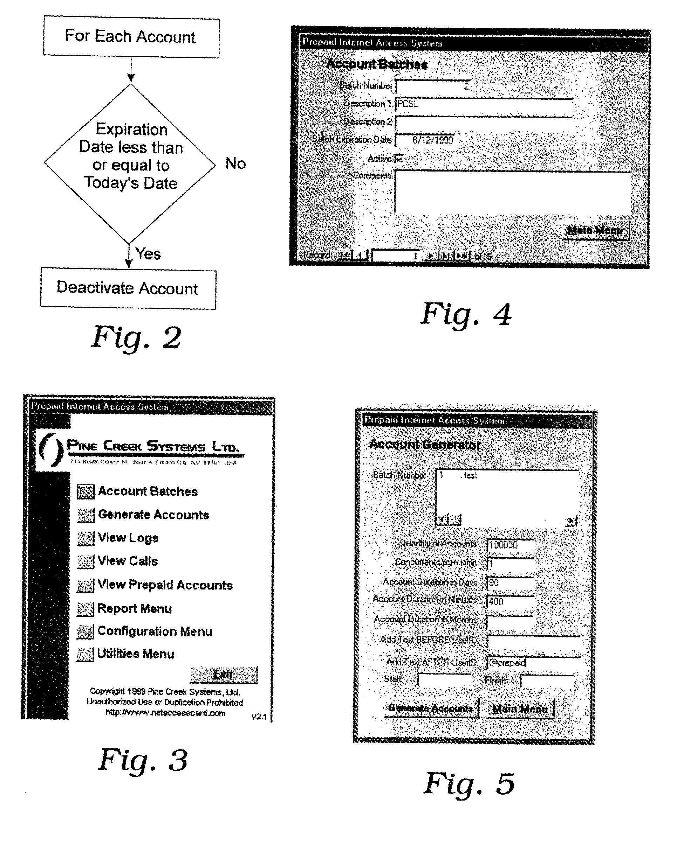

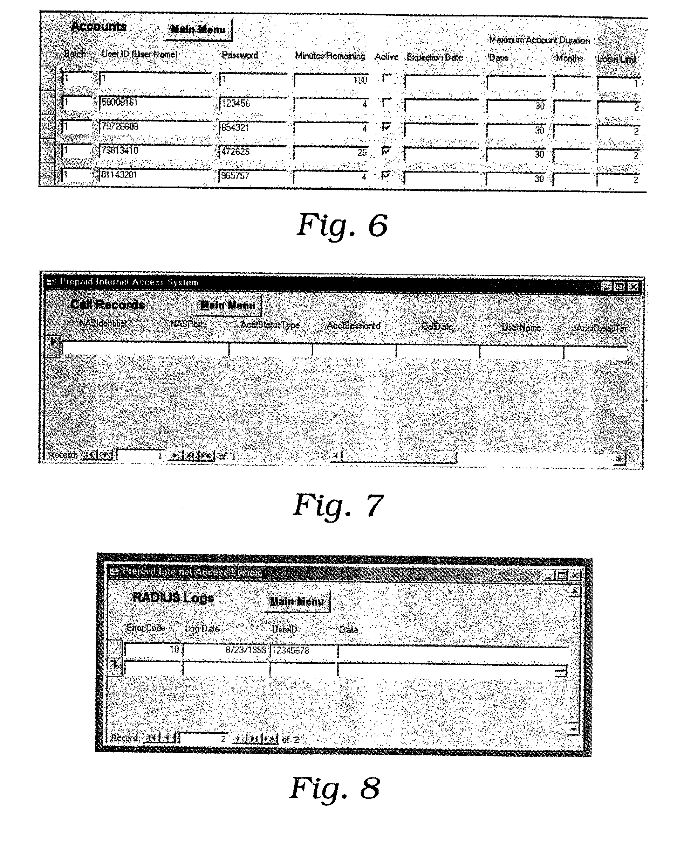

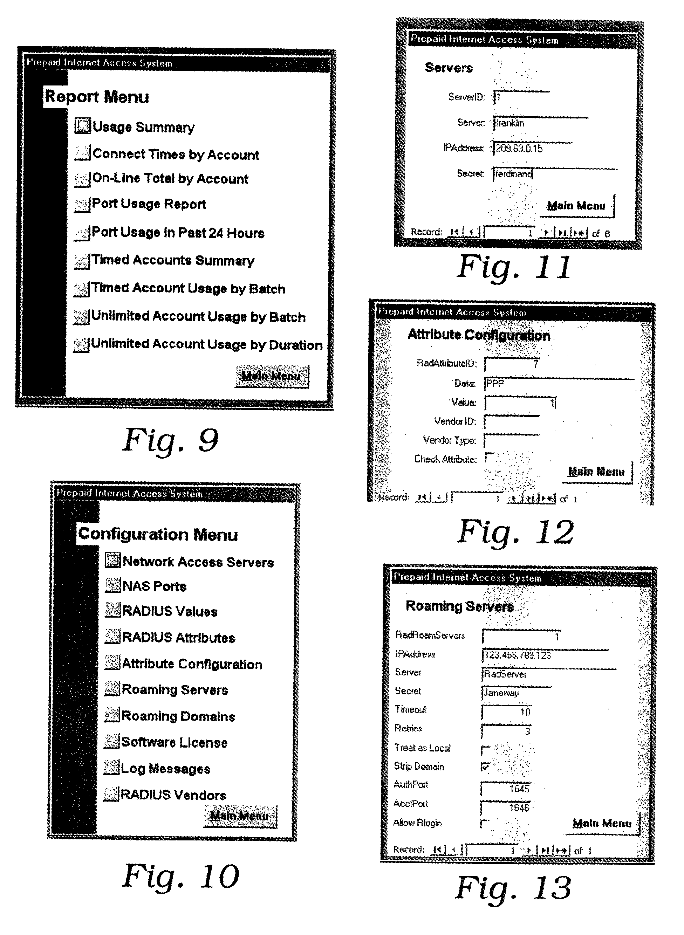

The above described drawing figures illustrate the invention in at least one of its preferred embodiments, which is further defined in detail in the following description. The present invention is a business method for providing Internet access to subscribers (users) to an Internet access service. The method comprises a set of sequential steps. Figs. 1 and 2 define the primary logic flow of the present method and Figs. 3-15 define several computer screens providing enablement of the present method.

Internet service providers (ISPs) enable access to the Internet for their clients or customers. There are a large number of ISPs and they differentiate themselves by offering various custom services. Some ISPs offer free access to the Internet while others charge a flat monthly fee. The present method provides Internet access as a service to those wishing to provide Internet access to their clients, in other words, to act as an internet service provider. In this method, an ISP provides access to the Internet to a client base. The client base comprises companies or individuals who, in turn, wish to provide Internet access to their customers, employees, children, etc. It is a two or three tiered business model comprising the ISP, the ISP's clients, and the client's customers or users. The user may obtain the service directly from the ISP directly or may obtain it from a client of the ISP, as a paid for service, a give-away, a premium, a gift or other means of transfer for this valuable asset. Ultimately, the sought good (actually a service) is Internet access.

In a first embodiment, wherein Internet access is obtained on a metered basis, a user having a need to access the Internet, or to provide such to others, requests access through the ISP via the public telephone network or other telecommunication channel. After making the telephone connection the service prompts the user to enter a user name and password. The ISP, upon receipt of the user name and password, verifies the user name, password, account activation status and account time balance. If all is correctly verified, the ISP acknowledges user access by identifying the account time balance of the user's account and then opens access to the Internet for the user. The user then proceeds to take advantage of this Internet access for a session time of not more than the account time balance of his account. Upon completion of the Internet session, or upon being cut-off at the end of the allowable time, the user disconnects from the Internet. At this time, the service calculates a new account time balance and identifies this balance to the user.

In an alternate embodiment of the present invention, the same procedure is followed, except the account is prepaid for a period of time without regard to the amount of time actually connected to the Internet. In this approach, the user will not be cut-off except if usage is continued or attempted at a date subsequent to the date of expiration of the account.

In this second embodiment of the invention, a user having a need to access the Internet, or to provide such to others, requests access through the ISP via the public telephone network or other telecommunication channel. After making the telephone connection the ISP prompts the user to enter a user name and password. The ISP, upon receipt of the user name and password, verifies the user name, password, account activation status and account termination date. If all is correctly verified, the ISP acknowledges user access by identifying the termination date of the user's account and then opens access to the Internet for the user. The user then proceeds to take advantage of this Internet access for as long as desired but not exceeding the date of expiration of the current account. Upon completion of each Internet session, or upon being cut-off at the end termination date, the user disconnects from the Internet. At this time, the service again states the termination date to the user, or states that the termination date has now been exceeded.

The present invention is further described as providing the present invention as an Internet based operational system managed by a system operator (Sysop). The system and method delivers a highly effective prepaid Internet access solution for primary customers (Pricus), while providing ease of use through a graphical user interface that offers quick access to all of the tools necessary for its operation.

Pricus operations are initiated using a computer screen and pointing device such as a mouse or roller ball, with screen icons on the users desktop or as selected from a Windows® program menu. This brings up a main menu which provides access to the most common functions and three submenus: reports, configuration, and utilities. Other options on the main menu includes view logs, which are created automatically when an account is not authenticated, a view calls option which shows a list of radius accounting information, including start and stop records, and a view prepaid accounts option which lists all of the prepaid accounts along with user identification and use information about each account.

A prepaid Pricus account is created by forming an account batch, or master account. Next, a generate accounts option enables creation of plural prepaid accounts which are tied to the account batch. These prepaid accounts are used by secondary customers (Seccus), the clients of the Pricus. All generated Seccus accounts are associated with a unique batch number so that they can all be deactivated at once by deactivating the account batch, and they can be deleted together. The batch number permits tracking and reporting so that the Pricus is appraised of his/her status.

To create a new batch, the Pricus accesses the end of the existing set of batch records and types a description which is related to the Pricus. The batch number is automatically assigned. Additional information can be entered along with comments if desired. A batch expiration date is optional, but may be used. The batch may be activated or deactivated by a simple pointing device. These options provide control over all the accounts associated with the batch.

### Other options include:

### Reset account time.

If the reset account time box is checked, a prepaid internet access system (PIAS) resets the time on every account in the batch to whatever is specified in minutes on this screen. This means that each account in the batch will have a maximum session timeout per day.

### Web discounts.

This is available for providing discounts on accounts based on web sites visited.

### Time discounts.

When this option is activated, accounts in this batch can receive a reduced rate for usage during non-peak times. The discounts received are based on what has been entered in the discounts by day and time screen under the configuration menu.

When accounts are generated, whatever numbers are in the account duration field are saved to the batch screen for the selected batch. Currently, days and months on the batch screen are used only for reference. However, minutes on the batch screen is used as the maximum account time when calculating reports.

While there is no limit to the number of Seccus accounts that can be generated under a batch number, it is advisable to create a new account batch each time prepaid accounts are generated. This makes Seccus accounts easier to track, report, and manage.

Each account batch is given a description so as to distinguish between them. A quantity of accounts is designated for each batch. Random user names and password numbers are automatically generated for each account. During this process the generator checks to assure that the user name is unique.

A concurrent login limit may be selected and is defined as the number of separate individuals on line in the account simultaneously with the same user name. In order for concurrency control to work, information must be entered defining all network access server ports. Concurrency control is most often used when offering unlimited access accounts, because with timed accounts, even when multiple sessions are active at the same time, the combined usage time is deducted from an account.

To create unlimited access accounts a specified number of days from first use are entered in the account duration in days field. Alternatively, one may enter a number for account duration in months. This will create an account that will expire on the last day of the month, a given number of months after first use. So a two-month account first used sometime in July would expire on August 31.

To create timed accounts the number of minutes to be used is entered into the account duration in minutes field. Account users can connect or disconnect any number of times as long as the sum of all their time online is less than the total of minutes allocated. When the user is authenticated, the number of minutes remaining in their account is multiplied by 60 and this number of seconds is sent to a NAS as the session-timeout and/or the ascend maximum time attribute so that the user will be disconnected if the total time on line is reached. When the user disconnects, the session time in the accounting packet is returned from the NAS and is divided by 60, to provide minutes subtracted from the remaining time on the account. In this way, account usage is rounded to the minute. When the account time remaining reaches zero, the account will no longer be authenticated.

A third alternative is to create an account that may be used for a set number of minutes and is restricted to also be used within a set number of days or months from first use.

Accounts can be generated with data added to the beginning or the end of the user identification number, or both, by entering data into the add text before user identification and/or the add text after user identification fields. This is most often used for working with proxy radius where the user identification needs to have a realm or domain attached to it.

The process of creating "top-up" accounts uses the same account generator that is already included for creating standard accounts. Then, if the active box on the batch is unchecked, the top up accounts cannot be used by themselves, but the balance on the account will be available for transfer to another account. There is a web site that basically has four fields-a username and password for each account plus a submit button labeled "top-up" or transfer balance.

After the user enters numbers for all four fields and then pushes the button, the account balance is transferred from the first account to the second. While in this configuration, the balance from any account can be transferred to any other account. In addition, there is a checkbox on the batch screen so that certain batches are designated so that only those batches can be used for topping up. Additionally, there is a second check box on the batch that designates which account batches can have time added to them. This allows the creation of essentially four types of batches of accounts: standard; where balances can not be added to or transferred from, except from normal usage, accounts used for top-up only, rechargeable accounts, and both; where balances can be recharged or transferred.

Note that it can also allow balance transfers as part of the Interactive Voice Response (IVR) system, with users entering usernames and passwords on their telephone keypad and pressing a specified number to complete the transfer.

Once accounts have been generated, they can be viewed and modified. Timed accounts include a number in the minutes remaining field, while unlimited access accounts do not. Timed accounts may also have a date in the expiration date field if such limit has been selected. Unlimited accounts or timed accounts that have a day or month limit will have an expiration date that is automatically calculated and the account will be automatically deactivated when the expiration date is reached. Once an account has been used, the number of days or months allowed is added to the date of first usage and this is automatically entered in the expiration date field.

If the Active box is not checked, the account will not authenticate. All of the radius accounting records received can be viewed. If an authentication request is received but cannot be authenticated because the account is not active, an entry is made in the log. Reports are reasonably self-explanatory. Reports are automatically generated and include information about the account, when it has used and for how long. Records are compiled with summary statistics.

A utilities menu is straightforward. Clicking on "delete radius logs" removes all the logs from the database. Clicking on "delete call records" not only removes the records in the calls table, but also first runs the batch processes necessary for accurately tracking unlimited access accounts. The Pricus also has the option of deleting radius logs and call records that are older than 60 days or before a specified date.

One of the features under the utilities menu is a bonus time generator utilized by selecting the batch number, number of minutes, and number of times, and clicking on either add-random, add-distinct, or add-all. Add-random adds the given number of minutes to a randomly chosen account in the selected batch and repeat adds this amount of time to a randomly chosen account for the given number of times. Therefore, the total amount of time added to the batch will be the number of minutes multiplied by the number of times. This enables control of exactly how much time is being added overall.

The add-distinct option is exactly like the add-random option with one exception; it will not add time to the same account more than once. So while accounts are still chosen randomly, once time is added to an account, add-distinct will not add time to this same account again.
The add-all button adds the number of minutes to all of the accounts in the batch. Each time an account is authenticated there are two accounting records created and thus two entries in the call records; a start record and a stop record.

The options on the configuration menu are only used when first setting up the system or when making some change to the configuration, such as adding additional servers, configuring proxy radius, or changing the attributes of dial-up accounts.

The first option on the configuration menu links to web discounts. It is available for providing discounts on accounts based on web sites visited. Also available is time discounts. When checked, accounts in this batch can receive a reduced rate for usage during non-peak days or times. The discounts received are based on what has been entered in the discounts by day and time screen under the configuration menu. The next option links to the servers form. Entries include a name, IP address, and shared secret in this form for each NAS that will be sending requests to the system. The name of the server may be any name, but the IP address must be correct and the secret is case sensitive.

In order to make it easier to get data into the NAS ports screen, the update button populates the NAS ports table with data from the call records, and it will not create duplicates. So instead of manually entering all the NAS ports during setup, an ISP may just wait for some call record data (radius accounting packets) to accumulate and then press the update button. ISPs with many ports can save a lot of time using this feature, and perhaps more importantly, the data will be entered accurately.

The attribute configuration table is where you add PPP attributes to the list of those returned when an account is authenticated, or change existing attributes such as the maximum session time or idle timeout. Note that when an account is authenticated, the system returns either the value of the session timeout listed here or the amount of time remaining on a timed account; whichever value is smaller. Therefore, if the session timeout is shorter than the total time left for an account, the user will be disconnected when the maximum session timeout is reached, but will still have time remaining on their account and can reconnect.

Stand-alone applications will not need to use proxy radius. When the system is used as an add-on to an existing radius system, such that the system receives proxy requests from another server, these forms are not used. However, sending proxy requests is available as an option, and these forms are used as called for. The account generator, supports adding domain information to generated accounts.

The system also includes a web site interface, which runs on Microsoft IIS®, so that Seccus can check the time remaining on their accounts. By typing in their user name and password, the Seccus can see on what day their account will expire and how many minutes are available on their account when they logged on. There is also an administrative website that allows a Pricus to operate and configure the system remotely.

While the invention has been described with reference to at least one preferred embodiment, it is to be clearly understood by those skilled in the art that the invention is not limited thereto. Rather, the scope of the invention is to be interpreted only in conjunction with the appended claims.

## Claims

1. A business method for providing Internet access, the method comprising the sequential steps:
requesting access to the Internet through at least one of a public telephone network, a DSL system, a cable system, a wireless communicating system, and a dedicated line;
presenting a user name and password;
verifying a user name, password, account activation status and account time balance;
acknowledging a user access by identifying an account time balance and expiration date;
opening user access to the Internet;
using Internet access for a session time of not more than one of the account time balance and expiration date;
disconnecting Internet access;
calculating a new account time balance; and
communicating the new account time balance to the user.

2. The method of claim 1 comprising the further steps of accessing a report, configuration information and utilities menu; viewing a log; viewing a summary of calls; and viewing a summary of prepaid accounts.

3. A business method for providing Internet access, the method comprising the sequential steps:
requesting access to the Internet through at least one of a public telephone network, a DSL system, a cable system, a wireless communicating system, and a dedicated line;
presenting a user name and password;
verifying a user name, password, account activation status and account time balance;
acknowledging a user access by identifying an account time balance and expiration date;
opening user access to the Internet;
using Internet access for a session time of not more than one of the account time balance and expiration date; and
disconnecting Internet access at a time not exceeding the account time balance.

4. The method of claim 3 comprising the further steps of accessing a report, configuring a utilities menu; viewing a log; viewing a summary of calls and viewing a summary of prepaid accounts.

5. The method of claim 3 comprising the further steps of forming an account batch; creating plural prepaid accounts; and tying the prepaid accounts to the account batch.

6. The method of claim 5 comprising the further step of assigning a user, user name and password to each of the prepaid accounts.

7. The method of claim 5 comprising the further step of defining a login limit.

8. The method of claim 3 comprising the further step of actuating at least a portion of the accounts.

9. The method of claim 8 comprising the further step of assigning a total time on the Internet to each of the asset balances of the active accounts.

10. The method of claim 8 comprising the further step of assigning a total elapsed duration of time to each of the asset balances of the active accounts.

11. The method of claim 8 comprising the further step of assigning a total time on the Internet and a total elapsed duration to each of the asset balances of the active accounts.

12. The method of claim 3 comprising the further step of viewing and modifying at least one of the accounts.

13. The method of claim 3 comprising the further steps of creating a summary of activities of each of the accounts; preparing reports; and storing records for such accounts.

14. The method of claim 1 comprising the further step of assigning discounts and variable rates.

15. The method of claim 1 comprising the further steps of assigning top-ups and recharging accounts.

16. The method of claim 1 comprising the further step of assigning a bonus time generator.
